# EUROPEAN PATENT SPECIFICATION

(11) **EP 1 001 904 B1**
(45) Date of publication and mention of the grant of the patent: **15.01.2003**
(21) Application number: 98937691.8
(22) Date of filing: 07.08.1998
(51) Int. Cl.: B65D 47/26, B65D 51/16, G01N 1/00, B01J 3/03

(54) **CHEMICAL VESSEL CAP**
KAPPE FÜR CHEMIEPRODUKTE ENTHALTENDE BEHÄLTER
BOUCHON POUR RECIPIENT CHIMIQUE

(30) Priority: 07.08.1997 GB 9716763
(43) Date of publication of application: 24.05.2000
(73) Proprietor: Mettler-Toledo Myriad Ltd., Melbourn, Royston, Herts SG8 6DN (GB)
(72) Inventor: KING, Toby, St. John, Trumpington, Cambridge CB2 2HT (GB); CASSELLS, John, Maclaren, Huntingdon, Cambridgeshire PE17 2BN (GB); GRAY, Richard, Henry, Cambridge CB2 5JZ (GB); CRISP, Paul, Malcolm, Peterborough PE8 6QB (GB)
(74) Representative: Haley, Stephen
(86) International application number: GB9802386
(87) International publication number: WO99007616

(56) References cited:
- EP-A- 0 391 585
- DE-C- 200 864
- US-A- 2 533 915
- US-A- 3 243 071
- US-A- 3 855 997
- US-A- 4 190 173
- US-A- 5 064 086

## Description

This invention relates to caps for use with chemical storage vessels of the type used in chemical synthesis and chemical experimentation. During chemical experimentation and chemical product synthesis there is often a need to store chemicals in vessels in such a manner that they do not come into contact with atmospheric gases or other substances with which they might react. Access to the contents of such vessels is, of course, required, and most are provided with a simple screw threaded removable cap, sometimes incorporating a rubber seal. Such a cap provides an air tight seal to protect the contents of the vessel, but allows access to the contents only by removal of the cap by hand.

Other caps incorporate a septum which can be pierced by a needle to access the vessel's contents.

Whilst this type of cap performs reasonably well, there are a number of problems associated with it. Firstly, the septum is unable to retain an adequate seal after it has been pierced a number of times, as the septum material deforms and splits. Secondly, even with a septum with a precut access hole, it is difficult to employ needles of large diameter which may be required to hold viscous substances unless a relatively large access hole is provided. Provision of a large access hole, however, does not allow provision of an adequate seal over time, as the septum deforms in use due to the forces applied to the septum during sampling/delivery apparatus insertion and withdrawal. A further problem is that such caps cannot cope with a storage of substances which may generate a gas build-up within the vessel, leading to the possibility of the vessel and/or cap exploding or leaking and spraying hazardous substances into a work area.

Another solution to the problem of storage of hazardous and reactive substances is to blanket the entire area in which experimentation is to be performed with an inert gas. It will be readily appreciated, however, that such an arrangement is very expensive and requires a large amount of machinery with high operating costs.

Although septa may be used successfully for many types of chemical synthesis, their use is limited to the less aggressive chemistries. There is an increasing need to automate general chemical syntheses, particularly for the synthesis of drug-like compounds for combinatorial drug discovery. In many cases the reagents used in classical chemical syntheses rapidly degrade elastomeric septa. In practice, this rules out the use of all low cost commercial elastomers for use as septa for aggressive chemistry. Elastomers with very good chemical resistance do exist, for example the perfluoroelastomers Chemraz® and Kalrez®, however these have physical properties that are not ideally suited to use as septa, and are prohibitively expensive for what is usually a disposable item. Short-term protection against chemical attack can be obtained by covering the inward-facing side of the septa with a thin film of PTFE. However, this is not entirely satisfactory because the PTFE film does not self-heal after repeated puncture by a needle, thus allowing chemical attack of the septa. In addition, the PTFE film has lower compliance than the septa and thus can reduce the sealing effectiveness. One known automated synthesis system makes use of two septa with a void between them to get round the problem of air ingress through punctured septa. The gap between the septa is continuously purged with inert gas so that a positive pressure is maintained and air cannot leak in through the outer septum and thus through the inner septum. This system only addresses one of the above mentioned problems of punctured septa, that of air ingress. It has the major disadvantage that it needs a continuous supply of expensive inert gas in use, and the vessels have to be grouped together in common manifold blocks to make it practical to supply this.

It is also clear that caps incorporating disposable septa have other disadvantages for high throughput, high performance automated synthesis. Reaction vessels with high functionality are expensive, and so need to be reused. The septa or caps on the vessels have to be changed between syntheses, and this adds complexity to the system and reduced throughput. In addition, septa do not perform well over wide temperature ranges. They can lose elasticity and become brittle at low temperatures (it is common to cool exothermic reactions to -70°C) and may not be able to withstand high temperatures (up to 200°C) required for reactions in a high-boiling solvent like dimethylsulphoxide, for example.

It is often desirable to gain unhindered access to a vessel to add or remove liquids, solids or magnetic stirring bars etc. It is also desirable to be able to connect other apparatus, for example a condenser, to a vessel.

When carrying out chemical synthesis in a closed vessel it is often desirable to have a means of introducing gas into the vessel to perform gas agitation, or to use the gas as a reagent. This in turn requires that the vessel must also incorporate a means of venting excess gas. This is also an important safety consideration in the event of gas evolution from the reaction or accidental boiling of the vessel contents. It is also desirable to provide accurate control of gas pressure and flow within a vessel so that gas can be used to perform fluid transfers and other precision fluidic processes within a suitably designed vessel. Conventional closures for small vessels suitable for high-throughput multi-vessel automated synthesizers do not meet some or all of these requirements. Simple septum closures can allow high pressures to build up inside vessels, to potentially dangerous levels. Such septa can vent through puncture holes made by a needle. These apertures are generally insufficient to cope with sudden out-gassing of a reaction, and as septa are designed to self-seal at least for the first few operations, they cannot be relied on to vent when required. The properties of an elastomeric septum can also vary in use. For example, high temperatures and/or swelling with a solvent softens the rubber, thus allowing it to vent at lower pressure. Variation of the venting characteristics of a vessel can make it difficult to control some in-vessel parameters such as liquid level, fluidic processes or gas agitation rate. Some automated synthesizers employ a dual needle arrangement so that the second needle may introduce or vent gas when the first needle is removing or adding a liquid. This approach gives some degree of pressure control during the short period of time when the needles are accessing the vessel, but do not control pressure build-up during the incubation of the reaction, which is by far the majority of the processing time.

In many multi-vessel synthesizers the reaction wells are grouped together into blocks or manifolds. This is often done to overcome difficulties associated with the closure. For example, in the above mentioned prior art system groups vessels together into a single manifold because the septum arrangement used needs a continuous supply of inert gas to function. The gas supply may be temporarily disconnected from the manifold to allow it to be moved to a new location, but it cannot remain disconnected for long periods. Simple closures consisting of a cap with a threaded connection for tubing are used in column-type synthesizers. In use, the vessels are permanently plumbed-in to a common network of reagent and supply tubes. One such system has 24 permanently-plumbed reaction vessels. The disadvantages of the grouped vessel or manifold approach are that it is difficult to use such an approach in a modular system where you may wish to move vessels from one system (for example reagent addition) to another (for example incubation or work-up) because there are many semi-permanent connections to be broken and then re-made. It is also not possible to put each vessel through independent processes. For example, all vessels in a manifold or block will have to share a common incubation profile, and this may not be ideal for every synthesis reaction in the block. It is also desirable to be able to weigh reagents or solid phase (resin beads) into each reaction vessel. The weight and bulk of block or manifold systems makes this difficult and in some cases impossible. Clearly, a closure system that allowed each vessel to be handled as a completely independent unit would overcome these difficulties.

US-A-4190173 discloses a cap for a beverage container, the cap having a rotable sealing lid.

The present invention seeks to provide solutions to the above problems.

According to the present invention there is provided a cap for a chemical storage or reaction vessel, the cap comprising:
a base plate for attachment, in use, of the cap to the vessel, the base plate having at least one port to allow access to the interior of the vessel; and
a top plate attached, in use, to the base plate and having a respective port for each port in the base plate, the top plate being attached such that it is movable between two positions, one of which has the at least one port of the base plate in alignment with the respective port of the top plate to allow access to the interior of the vessel, and the other of which provides a gas tight seal for the vessel, characterised in that:
   the cap has two ports and, the cap is arranged to start to open one of the ports prior to the other, upon movement of the top-plate with respect to the base plate.

A pressure relief valve may be provided for allowing venting of the vessel when the top plate is in its gas sealing position.

The top plate may be arranged so it rotates between the access and sealing positions. In such an arrangement the top plate may be attached to the base plate by means of a central pivot pin. The pressure relief valve may be provided by a biassing member which biases the top plate into engagement with the base plate and against which gas pressure within the vessel can act to urge the top plate and the base plate out of engagement in order to allow gas to escape from the vessel. With such an arrangement, the top plate may be arranged to tilt when urged out of engagement, allowing a selected port to vent before any other port.

The top plate may be arranged so that it rotates between the access position and an intermediate vessel closing position before being moved into sealing engagement with the base plate.

The top plate may be arranged to have a port which allows constant connection, in use, of the vessel to an external device, such as a condenser or sensor, even when the top plate is in the sealing position.

The pressure relief valve may be provided by a discrete valve positioned in the top plate.

The top plate may contain a gas inlet valve which is positioned over the at least one port in the base plate when the top plate is in it's gas sealing position. The gas inlet valve being arranged such that gas can be injected into the vessel in use without the cap being in it's vessel access position. Alternatively, fixed gas inlets and outlets may be provided.

Sealing members may be provided between the base plate and top plate to ensure adequate gas sealing.

The cap may have two ports, each of which is connected, in use, to one inlet of a U-shaped reaction vessel.

If two or more ports are provided in the cap, the surfaces of the top plate and base plate and/or the cross-sectional size and shape of the ports may be selected so that, upon opening of the cap, one of the ports starts to open prior to the others, allowing it to prevent a pressure before the others. Such an arrangement controls the flow of any liquid in a vessel to which the cap is attached, making removal of the liquid far easier. With such an arrangement, either the engaging surface of the top plate or the engaging surface of the bottom plate may have a recess formed therein, the recess removing sealing force from the appropriate O-ring at the appropriate time during the opening process.

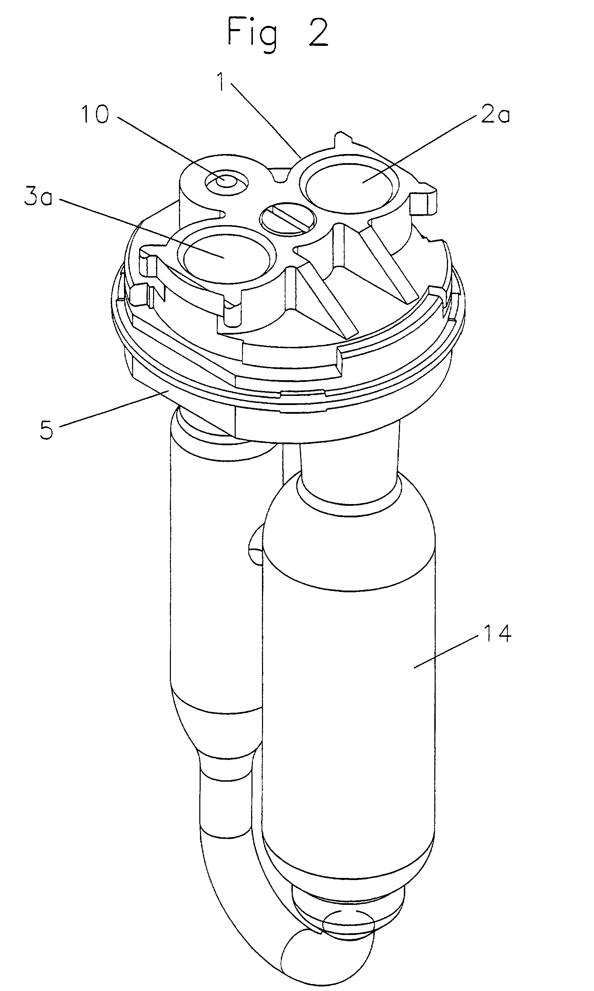

Figures 1, 1a, 1b and 2 show an exploded and assembled view of one embodiment of the invention;
Figure 3 shows an exploded view of a second embodiment of the invention;
Figures 4A to 4C show plan and side cross-sectional views of the embodiment of figure 3;
Figures 5A, 5B and 6 show plan, side, cross-sectional, and an exploded side-cross-sectional view of a third embodiment of the invention;
Figure 7 shows a side-cross-sectional view of a fourth embodiment of the invention;
Figure 8 shows a side-cross-sectional view of the third embodiment of the invention in use; and
Figures 9 and 10 show a side-cross-sectional views and a schematic side view of a sixth embodiment of the invention.

A top plate 1 incorporates two main ports, 2a, 3a, and a minor port 4. The top plate is attached to a base plate 5 by a pin 6 which locates through the central hole in the top plate and a biasing spring 7 and is secured by a quarter turn in a slot 8 in the base plate 5. Two optional perfluoloelastomer o-rings 9 (formed from Chemraz ®) are inserted in apertures 2b and 3b, are supported, in use, by supports 17 and provide a seal between the top plate and the vessel. The biasing spring 7 maintains a constant force on the sealing o-rings. A gas inlet valve 10 is provided in the top plate. This consists of a valve 10a, a biasing spring 10b and perfluoroelastomer o-ring 11, with port 4 providing the valve body. This is arranged such that downward pressure on the valve 10 either by mechanical means or gas under pressure unseats o-ring 11 allowing gas in through port 4.

A clamp plate 12 and two screws 13 secure the vessel 14 to the base plate. The top plate is arranged so that it may be rotated through 90° relative to the bottom plate to uncover or obscure ports 2b and 3b. In the closed position, the gas inlet valve 10 is positioned over port 3b. A groove 15 mates with a corresponding protrusion 16 on the top plate 1 to prevent the top plate 1 from lifting on that side. With the cap closed in use, excess pressure within the vessel will tend to push the whole cap up against the biasing force of the spring 7. The arrangement of features 15 and 16 prevent the top plate 1 from lifting on the inlet side (port 3b), but allows the top plate 1 to lift above port 2b thus venting excess pressure. This differential venting arrangement is important for the use of the cap in controlling fluidic processes.

Ports 2a, 3a and 4 on the top plate 1 all have chamfer features to allow temporary gas-tight connections to be made to them. Two flat regions on the base plate 5 allow the caps to be securely and accurately positioned in a support rack. Corresponding flats on the top plate 1 are provided to allow the top plate 1 to be gripped and rotated. These features are useful for the alignment and operation of the cap and attached vessel in a fully automated system.

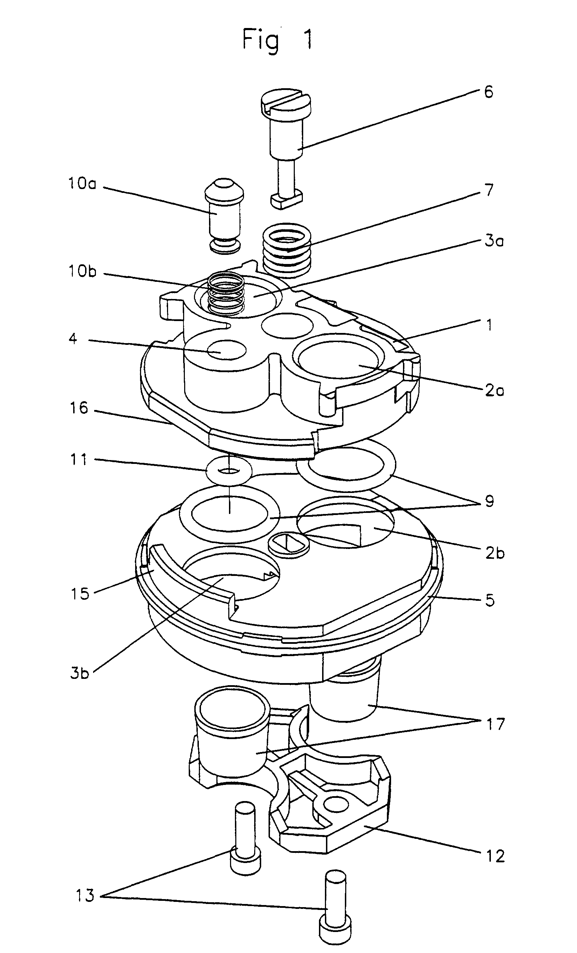

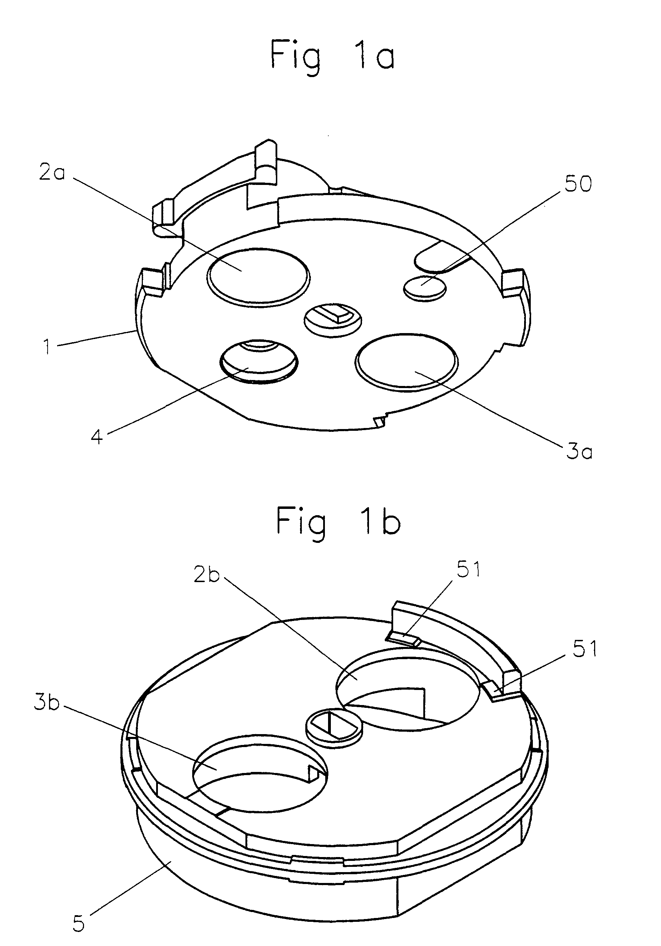

Referring to figure 1a, a recess 50 is formed in the engaging surface of the top plate 1. This recess ensures that the sealing force provided on the O-ring corresponding to the port 2b is reduced, allowing pressure relief, as the cap is rotated into an open position. This means that any pressure build up in the chamber of a vessel 14 attached to the port 2b will be reduced prior to that in any vessel attached to the port 3b, enabling control of fluid flow during use.

Referring to figure 1b, raised members 51 are provided on the surface of the base plate 5. These bias the top plate 1 so that its engaging surface is not parallel with that of the base plate 5. Such an arrangement ensures that, if the pressure relief mechanism is operated during use, gas vents from any chamber attached to the port 2b before its vents from the port 3b, again controlling fluid flow. It will be appreciated that these features are not essential, and/or that they do not need necessarily to be used in combination. So that the top plate 1 is able to tilt, the aperture in which the pin 6 sits is slight larger than the pin 6. With the arrangements shown in figures 1a and 1b it may be that preferable to avoid employment of these features but instead employ O-rings with different characteristics, or offset ports, or ports of different sizes or a combination thereof.

All components in contact with the headspace of the reaction vessel 14 can be made of extremely inert materials. Components 1,5,10 and 12 can be made from 25% glass-filled PTFE and highly chemically resistant alternatives (e.g. Halar, pure PTFE and carbon-filled PTFE). The vessel 14 may be made of glass, and the o-rings 9 Chemraz® or Kalrez®. High cost, high performance materials can be used economically with the invention because the cap can be re-used over many cycles.

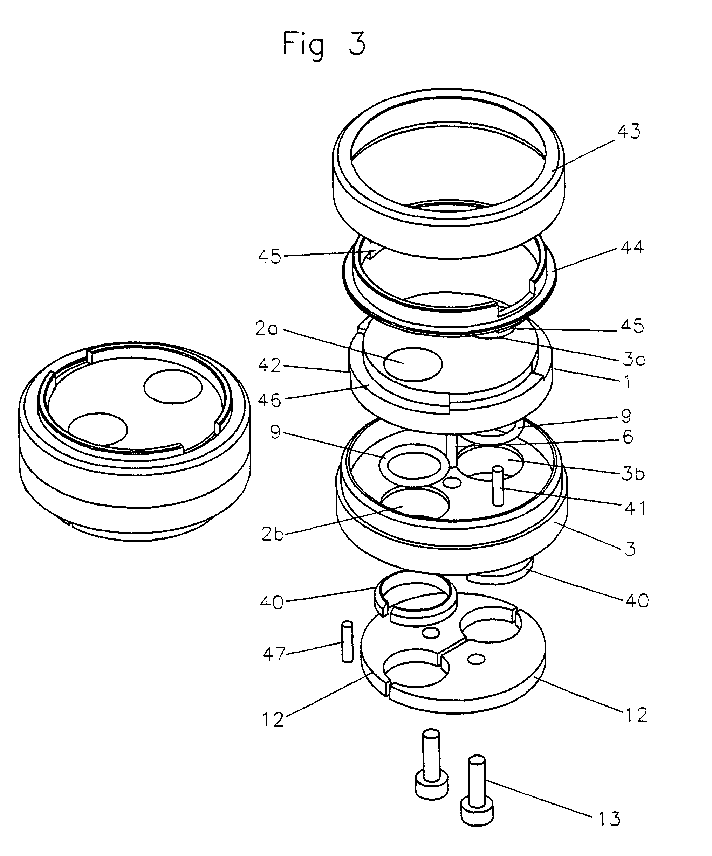

Figure 3 shows the cap attached to a U-tube reaction vessel 14. It will be appreciated that the cap can be attached to other types of vessels. Each chamber of the U-tube has it's own port in the cap. The U-tube consists of two chambers (side and main) connected by a capillary section. The main chamber is fitted with a frit to retain solid phase particles. With the cap in the open position solids and liquids may be added or removed through either or both chambers. A gas delivery system can be temporarily attached to either port through the interface in the top plate. Gas-tight sealing to allow gas injection into the vessel 14 is assured by pushing down with the gassing probe to both make a tight seal between the gas probe and the top plate 1, and to increase the bias force on the o-rings 9 to improve the seal between the top plate 1 and the vessel 14. This temporary gas-tight connection allows precise control of fluidic processes within the vessel. For example, gas may be injected into the main chamber to gently force liquid from the main chamber into the side chamber. If the gas supply is switched off, but the seal is maintained, the residual pressure in the main chamber prevents the liquid from back-flowing into the main chamber. This allows a pipette to be introduced into the side chamber to withdraw some or all of the liquid. Any remaining liquid can be pushed back into the main chamber by moving the gas injection probe to the side chamber port.

With the cap in the closed position the contents are protected from air ingress. Gas can be injected periodically through the inlet valve 10 to perform a number of functions without the need to open the vessel.

For example, inert gas may be used to agitate the contents of the main chamber, or a reactive gas such as hydrogen or carbon monoxide may be replenished by this route. When a vessel 14 containing liquid is cooled, the vapour pressure of the liquid drops. In this case, gas can be periodically injected in the vessel to maintain a super-ambient pressure.

In many cases, it is important to ensure that all the reagent solution remains in contact with a solid phase. The gas inlet valve holds a residual pressure in the side chamber, thus keeping most or all of the liquid above the frit in the main chamber.

The present invention also allows fine control of vessel venting. If the reagent solution in the vessel 14 out-gasses, it is important that a pressure balance is maintained to ensure the reagent solution remains in the main chamber, in contact with the solid phase. By allowing the top plate 1 to lift and vent on the main chamber side, but preventing it from lifting on the side chamber side a pressure differential is maintained whereby the side chamber pressure is always higher than that in the main chamber. Fine control of the venting pressure is also necessary to keep the sealing force and gas pressure of the gassing-in probe to a minimum. It will be appreciated that if the gassing-in probe seals with port 4 purely by pushing a seal against the chamfer in the port (a simple, and therefore desirable system for an automated machine), then the force that has to be applied to the probe/port interface has to be sufficient to compress the gassing probe seal enough to seal against the gas supply pressure. Good control of the venting pressure allows a gas supply pressure marginally higher than the venting pressure, thus reducing the force on the probe. The inlet valve 9 is opened by a pin on the gassing probe, thus avoiding the need to use higher pressure gas.

A further advantage of good venting pressure control with low hysteresis provided by the invention is that venting pressures can be kept low enough for ease of gas injection, but high enough to prevent excessive solvent loss on heating. Conventional septum caps do not give this fine control, especially over a wide temperature range, so are less reliable in automated systems.

A vessel fitted with the invention can be handled as a completely independent unit. The contents of the vessel are contained, and are kept free of contamination by air, without the need to be connected to any other system. This means that they can be freely moved between systems, either individually or in trays. For example, each vessel may be incubated separately, to suit the particular chemistry in that vessel. The vessel and cap assemblies are light and small enough to be weighed on an analytical balance, allowing hand or automated weighing of liquids and powders into the vessels through an open port, or gravimetric analysis of products. The flexibility the invention provides allows vessels to be processed individually where necessary, and to be grouped together in to batches. This makes the benefits of both parallel and serial processing available to the user.

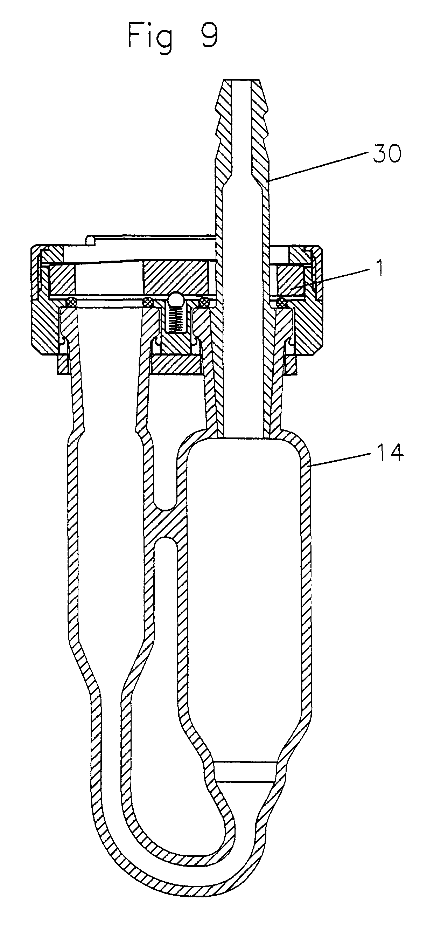

The invention also allows devices to be semi-permanently attached to the vessel. For example, with the cap in the open position, a condenser 30 (fig 9) with a B10 ground glass cone may be dropped through port 2 to mate with the B10 socket in the vessel. The condenser 30 or other device can then be carried around with the vessel 14 and cap as a unit.

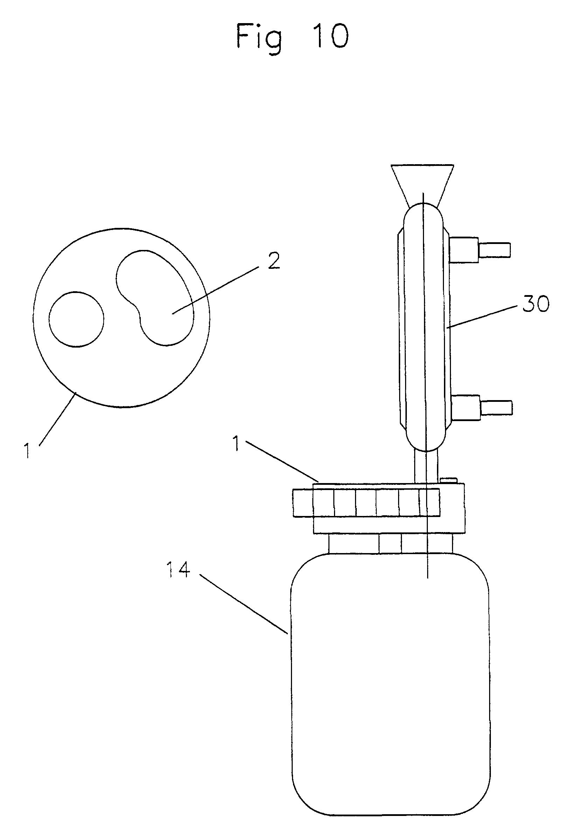

As can be seen from figure 10, the port 2 of the top plate 1 may be enlarged so that the vessel 14 can be sealed without the need to remove the condenser 30.

Figure 3 shows a second embodiment of the present invention. Components corresponding to those in the first embodiment are identically numbered.

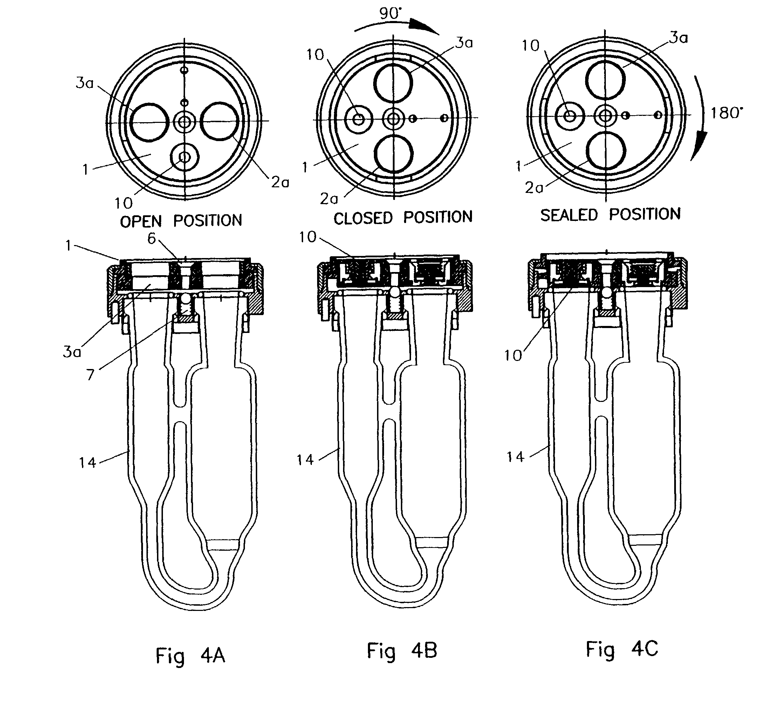

In this example, base plate 5 is attached to a vessel by clamp plate A12, split collets 40 and screws 13. Alternatively, the clamping arrangement of Figure 1 could be employed. The top plate 1 rests on the base plate 5 and is free to rotate through 90° to align the two ports 2b, 3b and the base plate 5 with the two ports 2b, 3b in the top plate 1. The rotation is limited by provision of a dowel pin 41 in the base plate 5 and a corresponding abutment 42 formed in the top plate 1. An outer cover 43 retains an operating ring 44 on top of the top plate 1. The operating ring 44 engages, by means of two lugs 45, with a cam track 46 formed on the top plate 1. The cover 43 retains the arrangement in position. The cap is closed by rotating the operating ring 44, with the lugs 45 engaging with the cam track 46 and rotating the top plate 1. When abutment 42 engages with pin 41, further rotation of the top plate 1 is prevented. Continued rotation of the operating ring 45 slides the lugs 45 along the cam track 46 which has varying depth. This urges the top plate 1 into engagement with the upper surface of the base plate 5 and the o-rings 9. A stop at the end of the cam track 46 prevents rotation past 180°. A further dowel 47 is provided for engagement with a tray into which the cap can be placed to prevent the bottom plate 5 and vessel rotating when the cap is opened. Rotation of this second embodiment between open, closed and sealed positions is shown in figures 4A to 4C.

This embodiment has advantages in situations where it is desirable to reduce the compression of the o-rings 9 before rotating the top plate 1 over them. For example, the o-rings 9 may lose their compliance at low temperature and fail to elastically deform. Also, this cap may be employed to seal a high pressure vessel 14 where the compression needed on the o-rings 9 will be too high to allow the top plate 1 to be rotated across them without distorting or unseating them. This arrangement therefore allows the top plate 1 to be rotated prior to o-ring 9 compression.

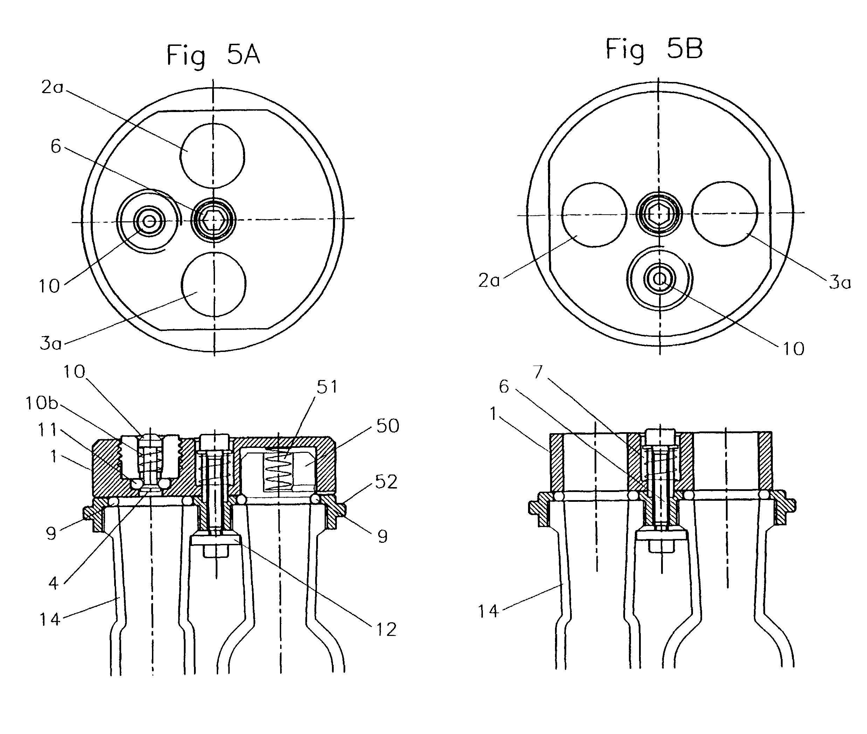

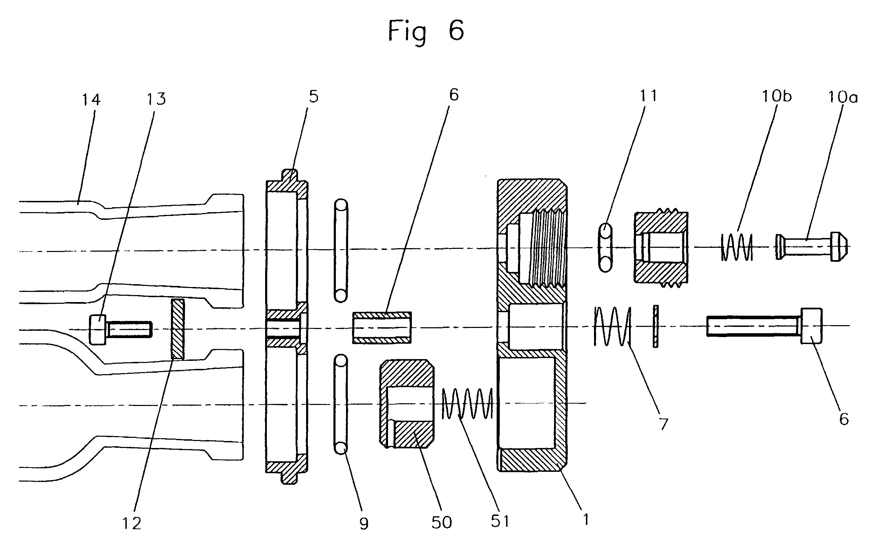

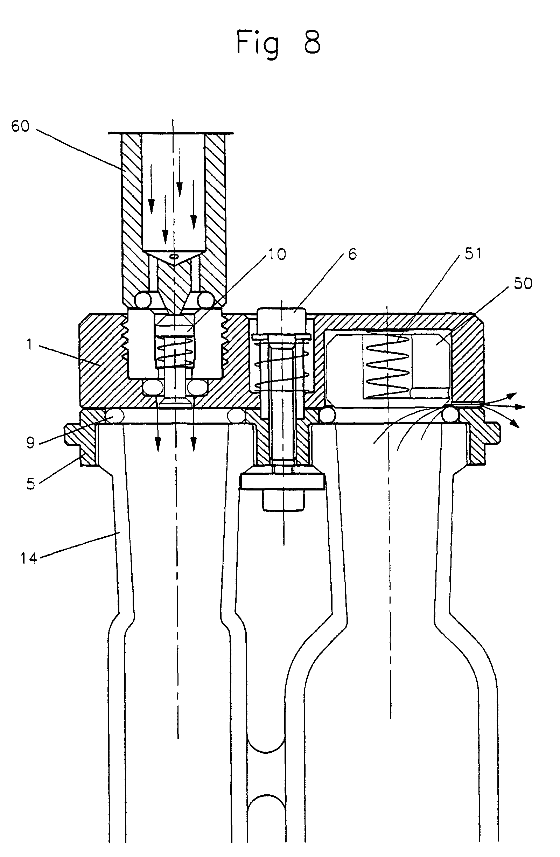

Figures 5A and 5B show a third embodiment of the invention in which, again, components corresponding to those in the first embodiment are identically numbered. In this embodiment an exhaust valve 50 is provided so that excess build-up of pressure within the vessel 14 can be vented. This exhaust valve 50 is urged into sealing engagement with o-ring 9 when the cap is in its sealed position (Figure 5A) by a spring 51. Excess pressure within the vessel 41 causes the valve 50 to move upward against the force of the spring 51, allowing gas to vent outward through aperture 52. This is shown in Figure 8. Figure 5B shows that, in its open position, the cap allows access, as with the other embodiment, to the vessel 14. Figure 6 shows an exploded view of this embodiment.

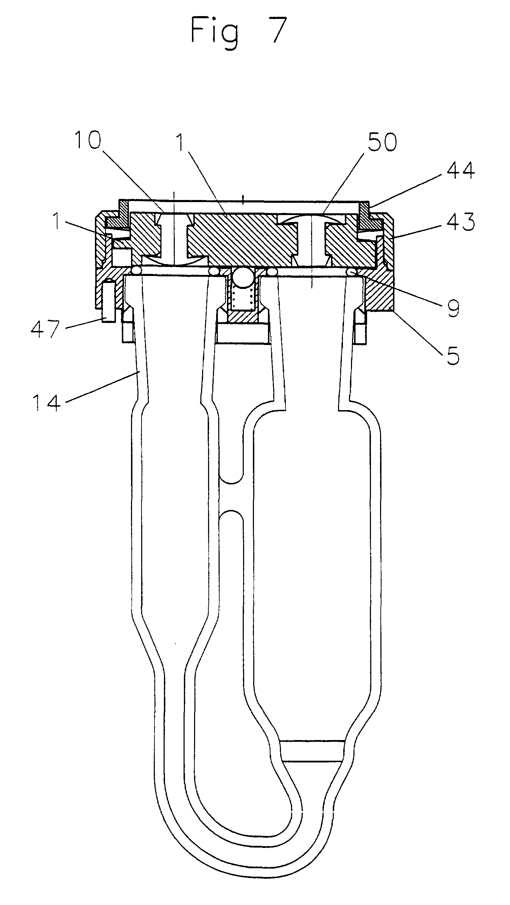

Figure 7 shows a fourth embodiment of the invention employing an alternative gas entry valve 10 and gas pressure relief valve 50 in which umbrella valves are employed. Apart from this feature this embodiment is of similar construction to that shown in figure 3.

Figure 8 shows how a gas nozzle 60 can be employed to open gas inlet valve 10 to bubble gas through the vessel 14, with the pressure relief valve 50 venting excess gas for the embodiment of figures 5A and 5B.

## Claims

1. A cap for a chemical storage or reaction vessel (14), the cap comprising:
a base plate (5) for attachment, in use, of the cap to the vessel, the base plate having at least one port (26, 36) to allow access to the interior of the vessel; and
a top plate (1) attached, in use, to the base plate and having a respective port (2a, 3a) for each port in the base plate, the top plate being attached such that it is movable between two positions, one of which has the at least one port of the base plate in alignment with the respective port of the top plate to allow access to the interior of the vessel, and the other of which provides a gas tight seal for the vessel, **characterised in that**:
the cap has two ports, (2a, 2b, 3a, 3b) and, the cap is arranged to start to open one of the ports (2a, 2b) prior to the other, upon movement of the top-plate (1) with respect to the base plate (5).

2. A cap according to claim 1, further comprising a pressure relief valve (50) for allowing venting of the vessel (14) when the top plate (1) is in its gas sealing position.

3. A cap according to claim 1, wherein the top plate (1) is arranged so it rotates between the access and sealing positions.

4. A cap according to claim 3, wherein the top plate (1) is attached to the base plate (5) by means of a central pivot pin (6).

5. A cap according to any of the preceding claims, wherein the top plate (1) is arranged so that it rotates between the access position and an intermediate vessel closing position before being moved into sealing engagement with the base plate (5).

6. A cap according to any of the preceding claims, wherein the top plate (1) is arranged to have means which allows constant connection, in use, of the vessel (14) to an external device even when the top plate is in the sealing position.

7. A cap according to any of claims 2 to 6, wherein the pressure relief valve (50) is provided by a discrete valve (50) positioned in the top plate (1).

8. A cap according to any of the preceding claims, in which, each of the ports (2a, 2b, 3a, 3b) is connected, in use, to a respective inlet of a U-shaped reaction vessel (14).

9. A cap according to any of claims 2 to 6, wherein the pressure relief valve (50) is provided by biassing means which urges the top plate (1) into sealing engagement with the base plate (5) and which allows the top plate to lift from the base plate under gas pressure.

10. A cap according to any of claims 2 to 9, wherein the pressure relief valve (50) is arranged so that is allows venting of one port prior to venting of any of the others.

11. A cap according to any of the preceding claims, in which the top plate (1) contains a gas inlet valve (10) which is positioned over one port in the base plate (5) when the top plate is in it's gas sealing position, the gas inlet valve being arranged such that gas can be injected into the vessel (14) in use without the cap being in it's vessel access position.

12. A cap according to any of the preceding claims, wherein sealing members (9) are provided between the base plate (5) and top plate (1) to ensure adequate gas sealing.

## Patentansprüche

1. Kappe für ein chemisches Aufbewahrungs- oder Reaktionsgefäß (14), wobei die Kappe aufweist;
eine Grundplatte (5) zur Befestigung der Kappe auf dem Gefäß im Gebrauch, wobei die Grundplatte mindestens einen Einlaß (26, 36) zur Ermöglichung eins Zugriffs zum Inneren des Gefäßes hat, und
eine Deckplatte (1), die im Gebrauch an der Grundplatte angebracht ist und einen entsprechenden Einlaß (2a, 3a) für jeden Einlaß der Grundplatte hat, wobei die Deckplatte so angebracht ist, daß sie zwischen zwei Positionen bewegbar ist, von denen in der einen der mindestens eine Einlaß der Grundplatte in Ausrichtung mit dem entsprechenden Einlaß der Deckplatte steht, um einen Zugriff zum Inneren des Gefäßes zu ermöglichen, und von denen in der anderen eine gasdichte Versiegelung des Gefäßes bewirkt ist,
**dadurch gekennzeichnet, daß**
die Kappe zwei Einlässe (2a, 2b, 3a, 3b) hat und die Kappe derart angeordnet Ist, daß einer der Einlässe (2a, 2b) bei Bewegung der Deckplatte (1) bezüglich der Grundplatte (2) vor dem anderen geöffnet wird.

2. Kappe nach Anspruch 1, die weiter ein Druckentlastungsventil (50) hat, welches eine Belüftung des Gefässes (14) erlaubt, wenn die Deckplatte (1) in ihrer Gasdichtigkeits-Position ist.

3. Kappe nach Anspruch 1, wobei die Deckplatte (1) so angeordnet ist, daß sie zwischen der Zugriffs- und der Abdichtposition drehbar ist.

4. Kappe nach Anspruch 3, wobei die Deckplatte (1) mittels eines zentralen Drehstiftes (6) an die Grundplatte (6) angebracht ist.

5. Kappe nach einem der vorangehenden Ansprüche, wobei die Deckplatte (1) so angeordnet ist, daß sie zwischen der Zugriffsposltion und einer dazwischen liegenden Gefäßverschlußposition drehbar ist, bevor sie in den dichtenden Eingriff mit der Grundplatte (5) bewegt wird.

6. Kappe nach einem der vorangehenden Ansprüche, wobei die Deckplatte (1) so ausgebildet ist, daß sie Mittel aufweist, welche im Gebrauch eine dauerhafte Verbindung des Gefäßes (14) mit einer externen Einrichtung auch dann erlauben, wenn die Deckplatte sich in der abdichtenden Position befindet.

7. Kappe nach einem der Ansprüche 2 bis 6, wobei das Druckentlastungsventil (50) durch ein in der Deckplatte (1) angeordnetes separates Ventil (50) gebildet ist.

8. Kappe nach einem der vorangehenden Ansprüche, bei der jeder der Einlässe (2a, 2b, 3a, 3b) im Gebrauch mit einem entsprechenden Einlaß eines U-förmigen Reaktionsgefäßes (14) verbunden ist.

9. Kappe nach einem der Ansprüche 2 bis 6, wobei das Druckentlastungsventil (50) durch Vorspannmittel realisiert ist, weiche die Deckplatte (1) in abdichtenden Eingriff mit der Grundplatte (5) drücken und welche es ermöglichen, daß die Deckplatte unter Gasdruck von der Grundplatte abgehoben wird.

10. Kappe nach einem der Ansprüche 2 bis 9, wobei das Druckentlastungsventil (50) derart ausgebildet ist, daß es eine Belüftung eines Einlasses vor einer Belüftung ihres anderen Einlasses erlaubt.

11. Kappe nach einem der vorangehenden Ansprüche, bei der die Deckplatte (1) ein Gaseinlaßventil (10) enthält, welches über einem Einlaß der Grundplatte (5) positioniert ist, wenn die Deckplatte sich in ihrer Gasdichtigkeits-Position befindet, wobei das Gaseinlaßventil derart ausgebildet ist, daß Gas im Gebrauch in das Gefäß (14) eingeleitet werden kann, ohne daß die Kappe in ihrer Gefäßzugriffs-Position ist.

12. Kappe nach einem der vorangehenden Ansprüche, wobei Abdichtelemente (9) zwischen der Grundplatte (5) und der Deckplatte (1) zur Gewährleistung einer angemessenen Gasabdichtung vorgesehen sind.

## Revendications

1. Bouchon pour récipient chimique ou cuve de réaction (14), le bouchon comprenant :
une plaque de base (5) destinée à la fixation, en utilisation, du bouchon à la cuve, la plaque de base ayant au moins un orifice (26, 36) pour permettre l'accès à l'intérieur de la cuve ; et
une plaque supérieure (1) fixée, en utilisation, à la plaque de base et ayant un orifice respectif (2a, 3a) pour chaque orifice de la plaque de base, la plaque supérieure étant fixée de telle manière qu'elle est mobile entre deux positions, l'une d'entre elles mettant le au moins un orifice de la plaque de base en correspondance avec l'orifice respectif de la plaque supérieure pour permettre l'accès à l'intérieur de la cuve, et l'autre assurant une étanchéité aux gaz pour la cuve, **caractérisé en ce que** :
le bouchon a deux orifices, (2a, 2b, 3a, 3b), et le bouchon est conçu pour commencer à ouvrir l'un des orifices (2a, 2b) avant l'autre, lors du mouvement de la plaque supérieure (1) par rapport à la plaque de base (5).

2. Bouchon selon la revendication 1, comprenant en outre une soupape de sûreté (50) pour permettre l'aération de la cuve (14) lorsque la plaque supérieure (1) est dans sa position étanche aux gaz.

3. Bouchon selon la revendication 1, dans lequel la plaque supérieure (1) est agencée de telle manière qu'elle tourne entre la position d'accès et la position étanche.

4. Bouchon selon la revendication 3, dans lequel la plaque supérieure (1) est fixée à la plaque de base (5) au moyen d'un axe de pivot central (6).

5. Bouchon selon l'une quelconque des revendications précédentes, dans lequel la plaque supérieure (1) est agencée de telle manière qu'elle tourne entre la position d'accès et une position, intermédiaire, de fermeture de cuve avant d'être mise en prise étanche avec la plaque de base (5).

6. Bouchon selon l'une quelconque des revendications précédentes, dans lequel la plaque supérieure (1) est agencée de façon à avoir un moyen qui permet la connexion constante, en utilisation, de la cuve (14) à un dispositif externe même quand la plaque supérieure est dans la position étanche.

7. Bouchon selon l'une quelconque des revendications 2 à 6, dans lequel la soupape de sûreté (50) est constituée d'une soupape discrète (50) positionnée dans la plaque supérieure (1).

8. Bouchon selon l'une quelconque des revenduations précédentes, dans lequel chacun des orifices (2a, 2b, 3a, 3b) est connecté, en utilisation, à un orifice d'entrée respectif d'une cuve de réaction en U (14).

9. Bouchon selon l'une quelconque des revendications 2 à 6, dans lequel la soupape de sûreté (50) est constituée d'un moyen de sollicitation qui pousse la plaque supérieure (1) pour la mettre en prise étanche avec la plaque de base (5) et qui permet à la plaque supérieure de se soulever de la plaque de base sous l'effet d'un gaz sous pression.

10. Bouchon selon l'une quelconque des revendications 2 à 9, dans lequel la soupape de sûreté (50) est agencée de telle manière qu'elle permet l'aération d'un orifice avant l'aération de l'un quelconque des autres orifices.

11. Bouchon selon l'une quelconque des revendications précédentes, dans lequel la plaque supérieure (1) contient une soupape (10) d'entrée de gaz qui est positionnée sur un orifice de la plaque de base (5) lorsque la plaque supérieure est dans sa position étanche aux gaz, la soupape d'entrée de gaz étant agencée de telle manière que du gaz peut être injecté dans la cuve (14) en utilisation sans que le bouchon soit dans sa position d'accès à la cuve.

12. Bouchon selon l'une quelconque des revendications précédentes, dans lequel des éléments d'étanchéité (9) sont placés entre la plaque de base (5) et la plaque supérieure (1) pour assurer une étanchéité aux gaz adéquate.
